(19) Europäisches Patentamt
European Patent Office
Office européen des brevets

(11) **EP 0 981 106 A2**

(12) **EUROPEAN PATENT APPLICATION**

(43) Date of publication:
23.02.2000 Bulletin 2000/08

(51) Int. Cl.$^7$: **G06T 3/40**

(21) Application number: 99250229.4

(22) Date of filing: 09.07.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 17.07.1998 US 118496

(71) Applicant: Pagemasters, Inc.
Phoenix, Arizone 85004 (US)

(72) Inventor: Dimitri, Thomas J.
Phoenix, Arizona 85007 (US)

(74) Representative:
**UEXKÜLL & STOLBERG**
**Patentanwälte**
**Beselerstrasse 4**
**22607 Hamburg (DE)**

(54) **Method and apparatus for image scaling**

(57) This invention relates to a method of rendering an image from image indicia at a lower resolution than that specified by the image indicia, the method comprising:

providing image indicia, the image indicia specifying an input image to be rendered at an input spatial resolution;
rendering an intermediate image by determining values in an oversized image matrix from the image indicia at an intermediate spatial resolution, the intermediate spatial resolution being made higher than the input resolution by a changeable enlarging scaling factor selected from a set, the set including both integer and non-integer values;
decimating the intermediate image matrix to generate a grayscale image matrix at an output spatial resolution, the output spatial resolution being made lower than the intermediate spatial resolution by a fixed integer decimation ratio, the grayscale value of each element in the decimated grayscale image matrix being calculated froma plurality of elements in the oversized image matrix; and
providing an output image derived from the grayscale image matrix.

FIG. 3

EP 0 981 106 A2

**Description**

## BACKGROUND OF THE INVENTION

This invention relates to systems for rendering an image at a reduced resolution.

Existing computer-aided drafting (CAD) programs generate a printed image by producing an electronic file according to a Page Description Language (PDL). The PostScript PDL, marketed by Adobe Systems Inc. is recognized by a majority of commercially available laser printers. An electronic file is typically spooled to such a printer, which interprets the PDL commands to generate a high-resolution printed image. However, the electronic file may also be saved to disk or other storage medium for printing at a later time or at a different location.

The typical electronic file contains PDL commands for rendering an image to be printed at a high resolution, i.e., with many pixels. It is sometimes desirable, however, to render the image at a lower resolution, i.e., with fewer pixels. This is useful for printing the image at a smaller size. For example, architectural drawings are commonly specified for printing in D-size format, but it is often desired to have half-size drawings in B-size format for ease of handling.

It is also desirable to preview on a video monitor the image to be printed. The resolution of even the best currently available video monitor is lower than the resolution provided by a conventional laser printer. Thus, the image is typically rendered at a lower resolution for previewing.

Various processes for converting binary images from one resolution to another are known. One known process electronically simulates a printing process upon a received binary image using a model which closely resembles the actual shape of the print spot produced by the printer. A high resolution grayscale image is generated from the binary image and then filtered. The filtered grayscale image is re-sampled at a certain frequency, thereby producing a grayscale image having a second resolution. This grayscale image is then converted to binary by error diffusion.

Another known process provides for resolution conversion by mapping input pixels to an output pixel grid using a filter weight matrix. The weights are used in association with an interpolation (or decimation) grid to identify a set of neighboring pixels that contribute information to a scaled output pixel value.

The processes described above are computationally expensive. The first requires a two-dimensional convolution for the simulation of a printing process. The second requires a mapping of output pixels using a filter weight matrix. Both processes require numerous multiplication operations to generate each pixel at the output resolution.

Other processes for resolution conversion are known that are less computationally expensive. Those processes are restricted to a relatively limited set of scaling factors. One such process doubles the resolution of an input image bitmap to produce an intermediate resolution image. The process then performs doubling and smoothing on the intermediate resolution image until the resolution of the intermediate resolution image exceeds the desired output resolution. Once the resolution of the intermediate image exceeds the desired output resolution, the intermediate image is converted to the output image by reducing the resolution of the intermediate image to a pseudo-gray output image having a desired output resolution. The ratio between the resolution of the intermediate resolution image and the resolution of the input image bitmap must be a power of two. Thus, this process provides a relatively limited set of scaling factors.

Another known process provides resolution conversion by (a) mapping input image pixels to a selected number of output pixels in accordance with a set of rules predetermined for a given scaling factor, and (b) constructing output image pixels based on a filter weight matrix. This process requires a separate set of rules for each scaling factor. Thus, a relatively wide set of scaling factors. is difficult to support.

Decimation (i.e., the reduction of the number of pixels in an image) may also be used to reduce the resolution of an image. Decimation may be as simple as, for example, throwing away every other pixel to cut the resolution in half. Such a simple decimation, however, destroys information, creating an error gradient in the image. The error gradient causes diagonal lines to appear more jagged in the decimated image. The error gradient can be mitigated if a filtering process is included in the decimation. This makes diagonal lines appear smoother by shading pixels on line edges with grayscale values. Decimation (on its own) is used to reduce the resolution of an image by an integer scaling factor, whether or not a filtering process is included.

It is computationally expensive to convert a binary image from one resolution to another by the known conversion processes described above, especially when accommodating a large set of possible scaling factors. Thus, there remains a need to accept an electronic file for controlling a PDL driven printer that contains commands for rendering the image to be printed at a high resolution and allow previewing on a video monitor of the image to be printed. There also remains a need to render (i.e., form) an image at a lower resolution without significant computational expense.

## SUMMARY OF THE INVENTION

A system according to various aspects of the present invention renders an image from image indicia (e.g. in an electronic file) at a lower resolution than the resolution specified by the indicia. For example, a system in one embodiment may read Page Description Language (PDL) commands, an example of such indicia, from an electronic file.

These commands may contain drawing information for vector objects as well as raster images. Raster images may be encoded in run-length or bitmap format. (Compressed and/or uncompressed bitmap formats may be suitably used.) Vector objects also include, for example, arcs and Beziér curves. These are considered vector objects because they are defined by coordinate data. Polygons include filled shapes whose borders are defined by such functions including, for example, filled circles and ellipses.

A system according to the invention renders an intermediate image from these PDL commands at a resolution higher than that specified by the PDL commands. The scaling of the intermediate image is chosen from a large set of possible enlarging scaling factors, such that the intermediate image can be decimated by a fixed integer factor to form the output image at the desired output resolution.

The resolution of the intermediate image is high enough to facilitate decimation without loss of feature information. The decimation step is performed with filtering to reduce the error gradient. Consequently, the output image may have grayscale pixels. Alternatively, the output image may have bilevel pixels formed by error diffusion.

According to an aspect of the present invention, the computational expense associated with converting a binary image from one resolution to another is avoided while a large set of possible scaling factors is permitted. These benefits permit previewing an image (on a video monitor) to be printed. The scale at which the image is previewed may be easily adjusted. The intermediate image is formed with an enlarging scaling factor, which may be other than an integer. Since rendering is performed with the scaling factor, the resulting (oversized) image has a higher resolution than that specified by the input image indicia. As a benefit in one embodiment, processes for resolution conversion of a bitmap image are avoided, because the intermediate image is formed directly from the PDL commands from an electronic file.

According to another aspect of the present invention, raster portions of an image, as defined by PDL commands having run length information, are formed at a higher resolution. A raster image is then produced at a resolution lower than that specified in the original PDL commands. As a consequence of using a scaling factor, the length of each pixel run is increased by an amount that increases the overall resolution of the resulting (intermediate) image. In a variation where the raster portions are defined by PDL commands having transition point information. The transition points may be simply scaled to be farther apart during the process of generating the intermediate image.

According to another aspect of the present invention, vector objects in the image are first rendered at a resolution higher than that specified by the PDL commands. Then a vector image is produced at a resolution lower than that specified. The process of rendering vector objects at a higher resolution than desired, followed by decimation to a lower desired resolution is actually more efficient than rendering vector objects at the lower resolution directly. This aspect of the invention provides for efficient anti-aliasing of vectors rendered at reduced resolution. Furthermore, these rendering operations require less computational expense than resolution conversion of a bitmap image containing rendered vector portions.

According to still another aspect of the present invention, the intermediate image is decimated to produce an output image at a lower resolution. This decimation step includes a filtering operation to reduce the error gradient in the lower resolution output image. In this filtering step, several pixels in the intermediate image are mathematically combined to produce each output image pixel at the lower resolution. Due to this mathematical combination, the output image pixel may have grayscale levels.

According to another aspect of the present invention, use of a predetermined decimation ratio (not subject to variation during operation) permits rendering at higher speeds. As a benefit in one embodiment, efficient specialized processing may be used to perform decimation using a fixed decimation ratio.

According to another aspect of the present invention, the output image contains bilevel pixels. The gradient error from the reduction in resolution from the intermediate image is diffused across several bilevel output pixels. Thus, diagonal lines still appear smooth in the lower resolution output image, even though the output image contains bilevel pixels. According to this aspect, rendering produces the output image from PDL commands that specify a high resolution image. The output image is produced by first defining a higher resolution bilevel image and then defining a lower resolution bilevel image through decimation and error diffusion of the higher resolution binary image.

According to various aspects of the present invention, resolution conversion with anti-aliasing is by defining an intermediate image at a higher resolution than the output resolution and then decimating the intermediate image to define an output image at the output resolution.

## BRIEF DESCRIPTION OF THE DRAWINGS

A preferred exemplary embodiment of the present invention is described below with reference to the drawing in which:

FIG. 1 is a functional block diagram of an image rendering system in an embodiment of the present invention;
FIG. 2 is a functional module diagram of software performed by the image rendering system of FIG. 1;

FIG. 3 is a data flow diagram of an image rendering method in an embodiment of the present invention;

FIG. 4 is a graph of a raster image described by input image indicia received by the image rendering system of FIG. 1;

FIG. 5 is a graph of a raster image rendered with an enlarging scaling factor of 4/3 in an example of rendering according to aspects of the present invention;

FIG. 6 is a graph of the raster image of FIG. 5 along with pixel values of a decimated grayscale image according to aspects of the present invention;

FIG. 7 is a legend for pixel values in FIGS 8 and 9;

FIG. 8 is a graph of a decimated grayscale image corresponding to pixel values shown in FIG. 6;

FIG. 9 is a graph of a decimated grayscale image with limiting of the grayscale values;

FIG. 10 is a flow diagram of a method of rendering an oversized raster image according to aspects of the present invention;

FIG. 11 is a graph of a line segment rendered from a vector object defined in PDL commands and from an enlarging scaling factor, according to aspects of the present invention;

FIG. 12 is a graph of a polygon rendered from a vector object defined in PDL commands and from an enlarging scaling factor, according to aspects of the present invention;

FIG. 13 is a partial map of memory 58 of FIG. 1;

FIG. 14 is a representation of data processed during decimation in an embodiment of the present invention; and

FIG. 15 is a flowchart of a decimation method in an embodiment of the present invention.

## DETAILED DESCRIPTION OF THE PREFERRED EMBODIMENTS

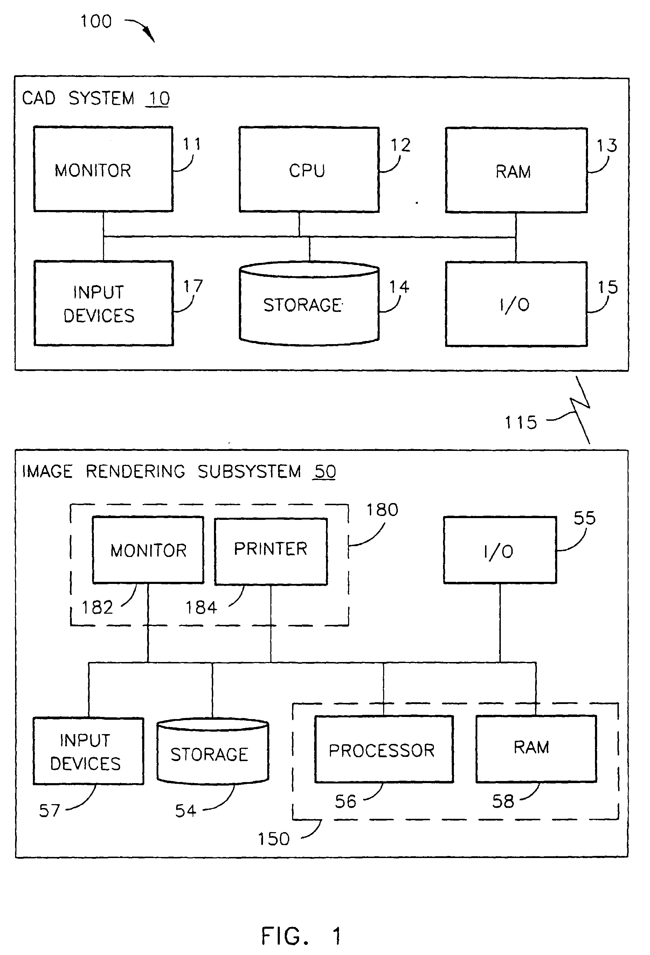

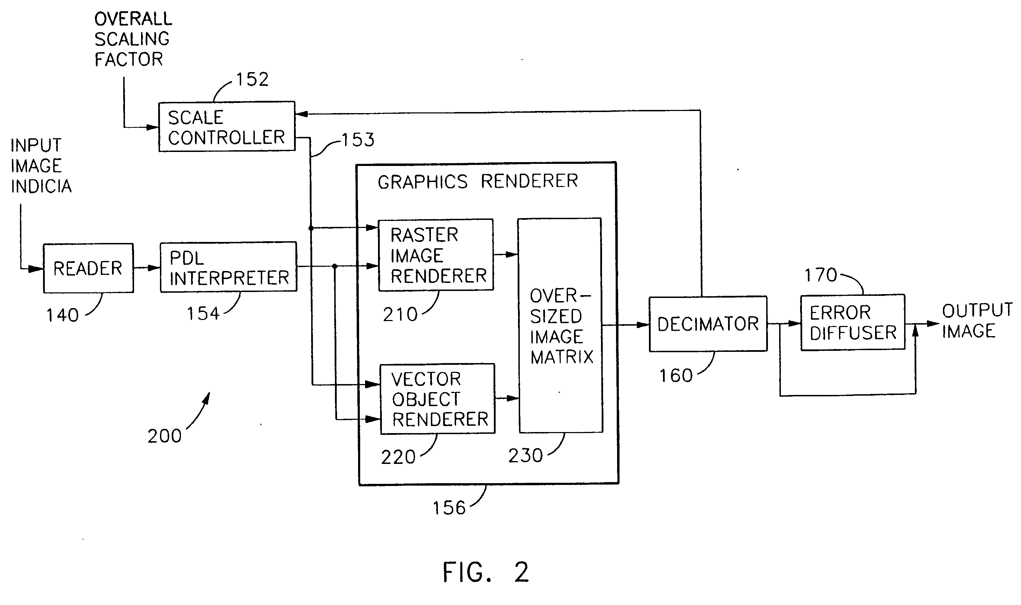

The present invention may be embodied in any system performing rendering of an image to provide a reduced resolution. Such a system suitably includes any group of components that interact to accomplish a computational or measurement task. For example, image rendering system 100 of FIG. 1 includes CAD subsystem 10, which provides image indicia to image rendering subsystem 50 via conventional communication link 115. CAD subsystem 10 suitably includes monitor 11, central processing unit (CPU) 12, memory unit (RAM) 13, disk storage 14, and I/O controller 15. I/O controller 15 transmits the image indicia to an I/O controller 55 in image rendering subsystem 50 (via . communication link 115). Communication link 115 may comprise any mechanism for communicating image indicia from subsystem 10 to subsystem 50, such as, for example, a conventional network connection, a telephonic modem connection, a shared memory device, or physically removable media. Image rendering subsystem 50 suitably includes output display subsystem 180, which includes monitor 182 and/or printer 184. Subsystem 50 also suitably includes disk storage 54 and graphics processor 150. Graphics processor 150 suitably includes processor 56 and memory unit (RAM) 58 for performing the functions of software 200, shown in FIG. 2.

Subsystems 10 and 50 suitably include input devices 17 and 57, respectively, for acquiring user input. Such input devices include a keyboard, mouse, and/or voice recognition.

FIG. 2 shows functions that are executed in a processing environment 150, which generally includes processor 56 and RAM 58, both shown in FIG. 1. In variations these functions are executed by special purpose processors and/or dedicated circuits. FIG. 2 is a functional block diagram for an embodiment wherein all functions are implemented primarily in software. Software 200 includes a reader (generally indicated as module 140), a PDL interpreter (generally indicated as module 154), a graphics rendered (generally indicated as module 156), a decimator (generally indicated as module 160), a scale controller (generally indicated as module 152), and an error diffuser (generally indicated as module 170). The various modules or combinations of functions in software 200 may alternatively be performed by suitable hardware.

In the embodiment of the invention shown in FIG. 1, CAD subsystem 10 cooperates with image rendering subsystem 50. The input image indicia are communicated as a binary data set to image rendering subsystem 50 via communication link 115.

In the embodiment of FIG. 1, communication link may suitably be an information storage medium such as a remote server, hard disk, CD-ROM, or diskette. Communications link 115 may also be a network connection or a hardwired connection in either parallel or serial format. Such an embodiment is suitable for rendering an image from PDL commands in a stored electronic file. Such a file may be generated using a "print to file" command available in CAD software. The "print to file" command allows the CAD software user to save to a storage medium an image to be printed. This allows the user to print such an image at a printer not connected to the computer that is running the CAD software.

In variations, some or all functions of CAD subsystem 10 are implemented in image rendering subsystem 50. As such, separate hardware for CAD subsystem 10 may be omitted and the input image indicia may be communicated to software 200 through a suitable software mechanism for passing information from one software module to another. Such a software mechanism may suitably include a pointer to an array or an OLE object.

FIG. 2 shows signal paths variously connecting modules of software 200. Images are communicated through these signal paths, including an intermediate image, a grayscale image, and an output image. The intermediate image is rendered into oversized image matrix 230 in graphics renderer 156, from which it is communicated to decimator 160. The grayscale image is communicated from decimator 160 to error diffuser 170, or in a variation, directly as the output image. In any case, the output image appears as the output of software 200. This communication is suitably performed by storage or transfer within software processing environment 150, or from environment 150 to an image display subsystem 180.

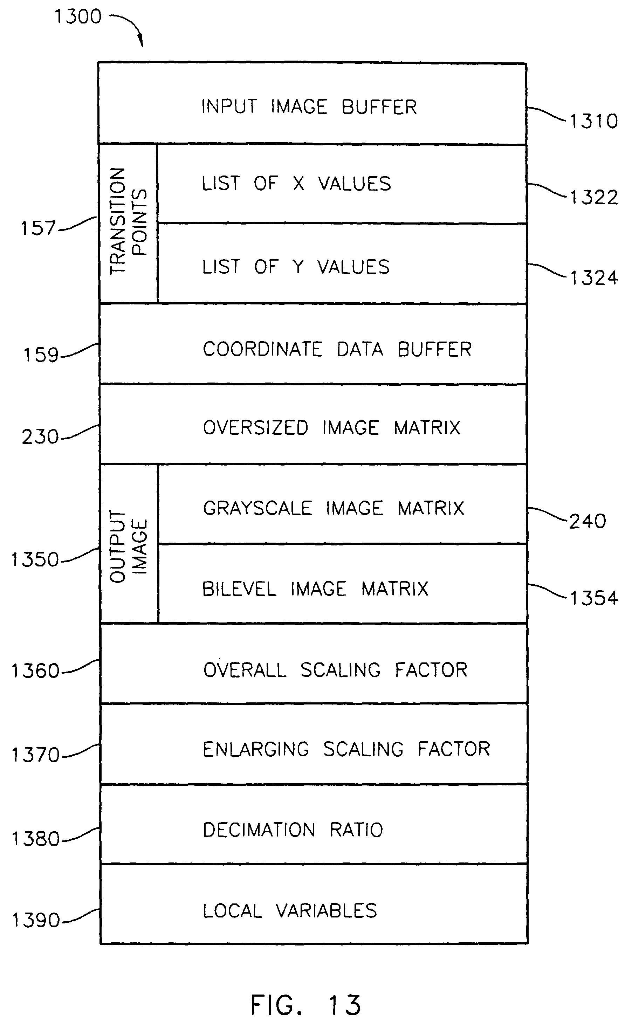

FIG. 13 depicts a region of memory 58 in software processing environment 150 for such storage and transfer. Memory space 1300 includes input image buffer 1310; list of transition points 157 (including a list of x values 1322 and a list of y values 1324); coordinate data buffer 159; oversized image matrix 230 for storage and transfer of the intermediate image; and output image buffer 1350. Buffer 1350 includes grayscale image matrix 240 and bi-level image matrix 1354 for storage and transfer of the grayscale image (and bi-level image where used). Memory space 1300 also contains variables, including overall scaling factor 1360, enlarging scaling factor 1370, predetermined decimation ratio 1380, and local variables 1390 for use among various functional modules of software 200.

Input image buffer 1310 receives the input image indicia, for example, through I/O controller 55 and is accessed by reader 140. Transition point list 157 is used for storage and transfer of transition point data between PDL interpreter 154 and raster image renderer 210. Coordinate data buffer 159 is used for storage and transfer of coordinate data between PDL interpreter 154 and vector object renderer 220. Oversized image matrix 230 receives raster images from raster image renderer 210 and vector objects from vector object renderer 220 as an intermediate image. The intermediate image combined in matrix 230 is sent to decimator 160. Output image 1350 includes grayscale image matrix 240, which receives the grayscale image from decimator 160. In a variation, output image 1350 also includes bi-level image matrix 1354, which receives a bi-level output image from error diffuser 170.

Overall scaling factor 1360 is set from user input through input devices 57 (shown in FIG. 1) to control scale controller 152. Enlarging scaling factor 1370 is computed by scale controller 152 and transferred from controller 152 to both raster image renderer 210 and vector object renderer 220. Predetermined decimation ratio 1380 controls the operation of decimator 160. Ratio 1380 may be predetermined by user input through input device 57 or as a constant in software 200.

Reader 140 reads input image indicia (e.g., PDL commands) for rendering an image at an input resolution. An output image is rendered at an output resolution lower than the input resolution, the reduction being determined primarily by the overall scaling factor. The output image may be displayed on an output image display subsystem 180, which suitably includes monitor 182 or printer 184, or both.

The output image may also be stored in disk storage 54 for conventional printing or viewing on a separate system (not shown), or transferred to CAD subsystem 10 via communication link 115. This storage may performed simultaneously with, or as an alternative to, the use of output display subsystem 180. The output image may be stored, for example, in uncompressed bitmap format, or as a Group IV compressed bitmap. Storing the output image is useful when the same image must be displayed or printed at reduced resolution several times since an output image, once stored, no longer needs to be rendered from the input image indicia. A stored output image may be used to provide an image, conventionally called a thumbnail view.

Reader 140 performs a conventional interface protocol to read information through I/O controller 55. Reader 140 provides PDL commands to PDL interpreter 154 in response to the information it reads through I/O controller 55.

PDL interpreter 154 extracts information from the PDL commands provided by reader 140. This information may be encoded in vector and/or run-length format. If data is present in bitmap format, PDL interpreter 154 extracts that information as well, preferably for conversion into run-length format. PDL interpreter 154 provides the vector and run-length information to graphics renderer 156. Renderer 156 defines an intermediate image 155 from this information and in accordance with an enlarging scaling factor provided by scale controller 152. Scale controller 152 provides the enlarging scaling factor in response to the overall scaling factor and the predetermined decimation ratio on which decimator 160 operates.

PDL interpreter 154 may perform an interim interpretation step in performing this extraction. In such an interim step, the PDL commands are broken up into simpler interim commands. For example, a circle may be described as a series of arcs, which is a curved form of vector shape. (Note that a filled circle is considered in this context of the present invention to be a polygon, even though such a shape has no corners.) As another example, alphanumeric characters may be described in the interim interpretation step as a sequence of linear vector shapes. As an alternative, PDL interpreter 154 may interpret PDL commands with specialized interim commands. In this type of interim interpretation, a relatively simple interim command is used to describe a detailed vector object that is frequently encountered.

Decimator 160 reduces the resolution of the intermediate image (to an extent defined by the predetermined decimation ratio) to provide the grayscale image. Decimator 160 may output the grayscale image directly to output display subsystem 180. In a variation, error diffuser 170 provides the output image (in bilevel format) to subsystem 180, based on the grayscale image 165.

The embodiment of the invention shown in FIG. 1 may provide a preview on video monitor 182 of an image to be printed on printer 184. After previewing, a full-resolution image may be printed directly from the image indicia received through I/O controller 55. For example, the output image (with reduced resolution according to the present invention) is previewed on video monitor 182. Scale controller 152 may perform functions of a graphical user interface with software 200 executed in software processing environment 150. Scale controller 152 receives the overall scaling factor from a user. The user may change the overall scaling factor to zoom in and out of a previewed image, displayed on video monitor 182. The user's selection of a zoom factor is transmitted to image rendering subsystem 50 via input devices 57, which may include menu selections, keystrokes, voice commands, or other suitable forms of user input. The user may adjust the zoom factor to render the output image at a desired resolution. Since the resolution of video monitor 182 may be lower than the resolution provided by printer 184, image rendering subsystem 50 renders the output image at a lower resolution than that specified by PDL commands intended for printer 184. The overall scaling factor may also be provided as a fixed scaling value suited for a particular rendering task.

In software 200, graphics renderer 156 and decimator 160 cooperate to provide the output image at a resolution lower than that specified by the input image indicia (e.g., PDL commands received through I/O controller 55). Renderer 156 renders the intermediate image at a resolution higher than that specified by the input image indicia. Decimator 160 reduces the higher resolution by the predetermined decimation ratio to provide the output image at the desired reduced resolution.

The predetermined decimation ratio is stored in variable 1380, shown in FIG. 13. This ratio is defined by two integer values for numerator and denominator, respectively. Preferably, the decimation ratio is defined by one integer value understood to be the denominator with the integer 1 as the numerator (i.e. a reciprocal $1/R$). Preferably R is a binary power of 2, most preferably 4 or 8. For example, when R=4, decimator 160 provides grayscale image 135 with 1/4 the resolution of the intermediate image. As discussed above, the intermediate image is stored in oversized image matrix 240, shown in FIGS. 2 and 13.

As discussed above, the input resolution may be defined by PDL commands received through I/O controller 55. The resolution of the grayscale image (stored in grayscale image matrix 1352) is generally lower than the input resolution by an overall scaling factor. This overall scaling factor may be expressed as $(N+P) \times (1/R)$, where $N+P$ is an enlarging scaling factor used by renderer 156 and $1/R$ is the decimation ratio. Overall scaling factor 120 may be responsive to user input even though the decimation ratio is preferably fixed (i.e., not subject to variation by the user for zoom in or zoom out).

The enlarging scaling factor $(N+P)$ is selected from a set that includes both integer and non-integer values. This means that the enlarging scaling factor is not necessarily an integer. Processor 56 (shown in FIG. 1) preferably represents the enlarging scaling factor by the sum of integer component N and fractional component P. The integer component is that portion of a number to the left of the decimal point. The fractional component is that portion of the number to the right of the decimal point.

Fractional component P is preferably scaled to a binary number having an integer value between zero and 65535. The scaling is such that an unattainable binary value of 65536 corresponds to 1. Thus, fractional component P can take on any value greater than zero and approaching one (but not ever reaching it). For example, when N=1, P=0.3333, and R=4, the overall scaling factor is:

$$(1+0.3333) \times 1/4 = (4/3)/4 = 1/3.$$

Using this set of scaling factors (i.e., N, P, and R), the output image is rendered at an output resolution that is one third the input resolution specified by the input image indicia. In this example, graphics renderer 156 defines the intermediate image at an intermediate resolution that is 4/3 higher than the input resolution. In this example, fractional component P has a value of 0.3333. This value of P is preferably represented by a binary number having an integer value of 21,845 because 21,845 divided by 65536 is approximately equal to 0.3333. The enlarging scaling factor 1+0.3333 is then represented by an integer (one) with a first numerical weight plus 21,845 with a second numerical weight. The first numerical weight (e.g., $2^0$) relates to the integer component (left of the decimal point), while the second numerical weight (e.g., $2^{-16}$), smaller than the first numerical weight, relates to the fractional component (right of the decimal point).

Renderer 156 may be implemented using suitable floating point, fixed-point, or integer programming techniques. For example, enlarging scaling factor $(N+P)$ may be implemented with integer arithmetic operations for N and P for greater processing speed than fixed point or floating point representations. As discussed above, a run length may be scaled using an integer arithmetic method. For example, a length to be scaled may be represented by the integer Q. The scaling $Q \times (N+P)$ may be factored into two terms. For the first term, Q is multiplied by integer component N. For the second term Q is multiplied by the integer P. These two terms are then aligned (shifted) for normalization and then added. This sequence of steps provides speed and accuracy.

A graphics renderer according to aspects of the present invention defines an image matrix having a larger number of elements than specified by the input resolution. For example, graphics renderer 156, as shown in FIG. 2, includes modules 210 and 220 for rendering oversized raster images and oversized vector objects, respectively. These functions affect elements in oversized image matrix 230 from which the intermediate image is read. Renderer 156 defines the intermediate image from raster transition points 157 and vector coordinate data 159. PDL interpreter 154 (shown in FIG. 2) provides transition points 157, which specify raster images in run-length encoded format, to module 210. Module 210 defines oversized raster images (or a single raster image if that is all that the input image indicia specify) in oversized image matrix 230. Preferably, PDL interpreter 154 also provides coordinate data 159 to module 220. Module 220 defines oversized vector objects (or a single vector object if that is all that the input image indicia specify) in oversized image matrix 230.

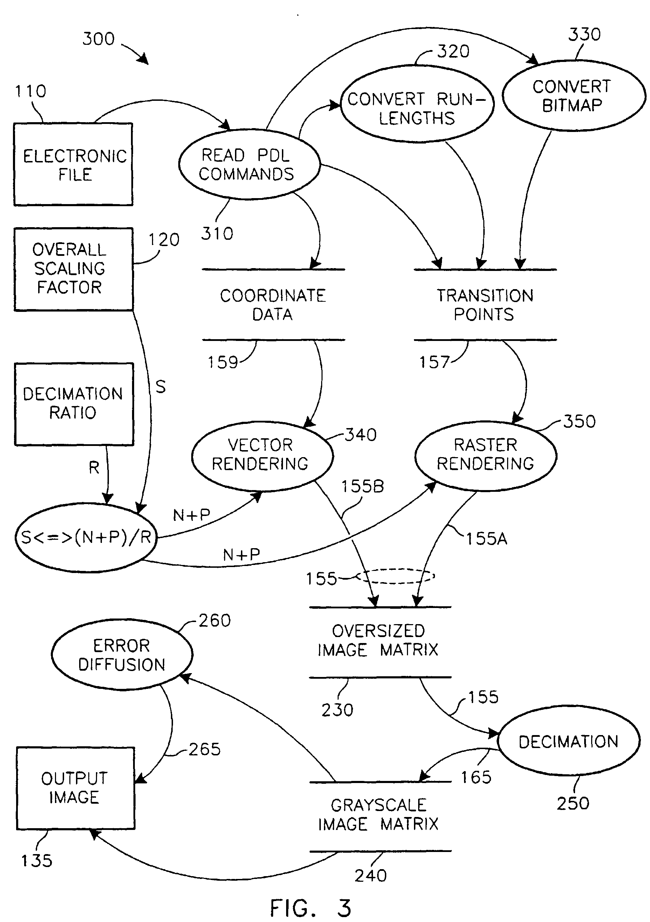

An Image rendering subsystem of the present invention includes any system of hardware and software that performs a method of graphics rendering by single (e.g. batch) or multiple processes or by multitasking. In a variation supporting high throughput, independent method steps may be arranged to operate in parallel in a distributed processing or multiple processor architecture. Such a system 300 may be understood with reference to the data flow diagram of FIG. 3.

Process 310, which performs a function of reader 140, reads PDL commands from electronic file 110 and provides coordinate data 159 and transition points 157. Transition points 157 are points along each individual row of an image to be rendered where a run of pixels makes a transition from one shade (or color) to another. Transition points may be referenced to the start of the row or to a previous transition point.

Process 320, which performs a function of PDL interpreter 154, converts run-length encoded data into transition points 157. Process 330 performs another function of PDL interpreter 154 by converting any bitmap data into transition points 157.

Coordinate data 159 and transition points 157 are used to define intermediate image 155 in oversized image matrix 230. Vector rendering process 340 and raster rendering process 350 perform rendering by defining the value of elements in matrix 230. Raster rendering process 350, which performs a function of raster image renderer 210, renders so-called image portions of oversize raster image matrix 230 based on transition points 157. Vector rendering process 340, which performs a function of vector object renderer 220, renders so-called object portions of oversized image matrix 230 based on coordinate data 159. Separately defined parts may in fact overlap with conventional graphics effects such as opacity, translucency, or transparency.

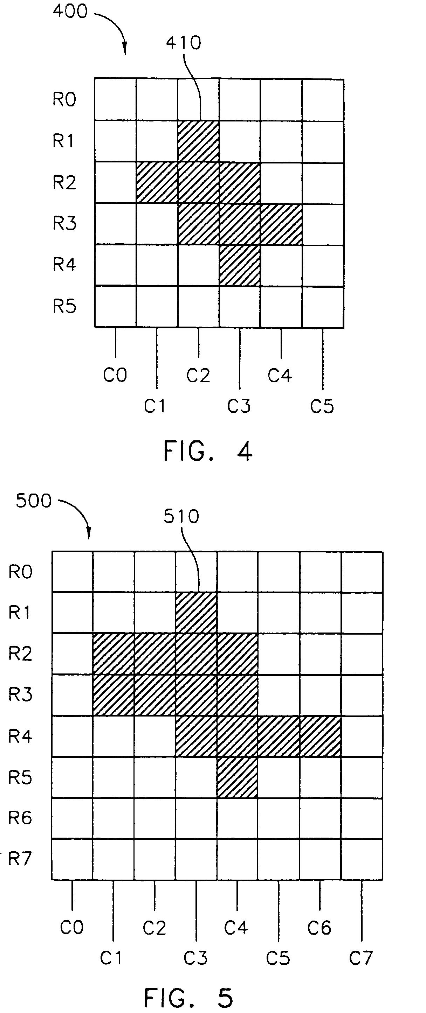

Decimation process 250 performs a function of decimator 160, which may be better understood with reference to example images shown in FIGS. 5-9. FIG. 5 shows an oversized raster image 500 that includes a shape 510 somewhat resembling a tilted rectangle. Information representing image 500 is stored in oversized image matrix 230. Image 500 and matrix 230 (in which information representing image 500 is stored) are not shown in any common figure of the drawings. By way of explanation, it should be noted that image 500 and matrix 230 are two related entities of different types. Image 500 is an arrangement of information having no physical structure, although it is shown as it would likely be displayed on a device that does have a physical matrix structure. Matrix 230 is an arrangement of data storage elements which is preferably structured as a conventional data structure or array in memory 58.

In a preferred embodiment of the present invention, processor 56 (shown in FIG. 1) stores image information of oversized image matrix 230 in a memory array having 16-bit words. Eight bilevel pixels represented by matrix elements in matrix 230 are stored in an 8-bit word, each matrix element being a single bit. When decimation step 250 (FIG. 3) converts the data in oversized matrix 230 into a grayscale image, to be stored in grayscale image matrix 240, the grayscale data is preferably stored in the physical positions of the memory array previously used to represent the intermediate image. However, a separate array may also be used. At this point, data corresponding to the intermediate image in oversize matrix 230 is no longer needed and is overwritten.

Each pixel represented by a matrix element in grayscale image matrix 240 may be stored as a four-bit word. This configuration allows grayscale pixel values from zero to 15 to be stored. Decimation process 250 produces a grayscale pixel value based on the quantity of 16 bilevel pixels that are set to an "on" (e.g., "1") state. At times, all 16 bilevel pixels are set to an "on" state. Since a value of 16 cannot be represented by a four-bit word, the resulting grayscale pixel value of 16 is set to 15 (i.e., capped). Alternatively, each matrix element in grayscale image matrix 240 may be a 5-bit word. This configuration allows grayscale pixel values from zero to 31 to be stored, the values from zero to 15 being used in this example.

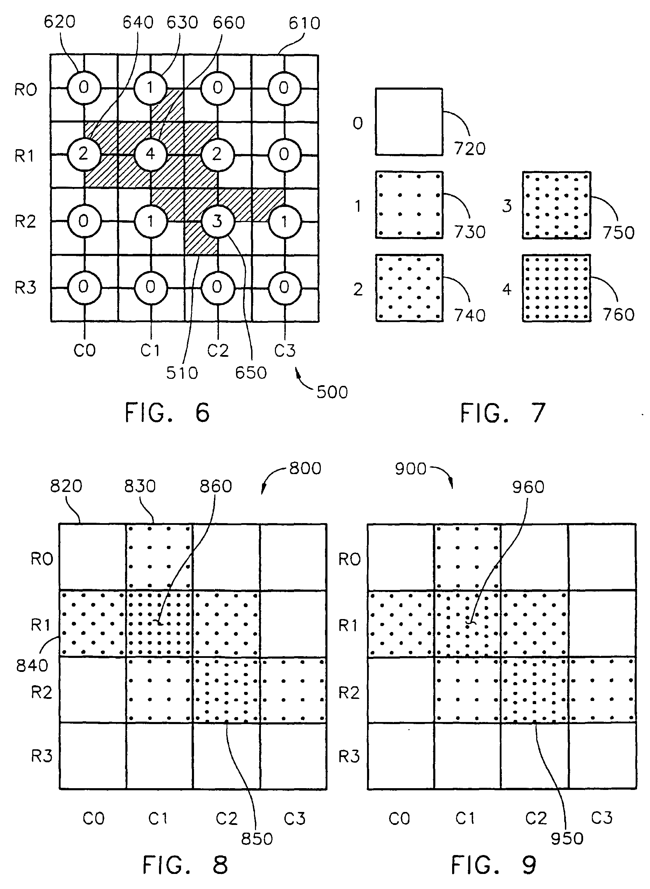

FIG. 6 also shows raster image 500, including shape 510. In addition, FIG. 6 shows an example of the function of decimation process 250. A grid 610 shows the arrangement of pixels making up image 500. Grid 610 is arranged at the resolution of oversized image matrix 230. In the example of FIG. 6, decimation process 250 reduces the resolution of image 500 by a factor of four to produce a grayscale image 800, shown in FIG. 8. Grayscale image 800 is of the type stored in grayscale image matrix 240, shown in FIGS. 3 and 13.

Pixel values of the output image in the example of FIG. 6 are represented by circled numbers. Four pixels in image 500 are covered by each circle. Decimation process 230 computes each grayscale image pixel from the sum of four intermediate image pixels. Each circle therefore is labeled with the number of bi-level intermediate image pixels that it covers. In this simplified example, the decimation ratio is equal is ½ (i.e., R=2). Because the intermediate image pixels are bilevel, the sum of those pixels is simply the number of pixels covered that are set to an "on" state.

FIG. 6 provides examples showing how each shade of pixel is computed to produce grayscale image 800. One of these grayscale image pixels is located in the upper-left corner of grayscale image 800 and is represented in FIG. 6 by circle 620 and shown in FIG. 8 as a non-shaded grayscale pixel 820. Circle 620 is labeled "0" because all of the bilevel pixels it covers in the intermediate image are set to an "off" state. A pixel 720, non-shaded like pixel 820, is shown in the legend of FIG. 7, labeled with its grayscale value of "0" for clarity.

A grayscale image pixel 830 that is slightly shaded (corresponding to a grayscale value of "1") is just to the right of pixel 820 in FIG. 8. FIG. 6 shows a circle 630 labeled "1" that represents pixel 830. Circle 630 has a value of "1" because it covers a single bilevel pixel having an "on" state. A pixel 730, shaded like pixel 830, is shown in FIG. 7, labeled with its grayscale value of "1" for clarity.

Grayscale image pixels 840 and 850 are successively more shaded than pixel 830 (corresponding to grayscale values of "2" and "3," respectively). Pixel 840 is just below pixel 820, while pixel 850 is the pixel below and to the right of pixel 860. FIG. 6 shows circles 640 and 650 labeled "2" and "3" that represent pixels 840 and 850, respectively. Circle 640 has a value of "2" because it covers two bilevel pixels having an "on" state. Circle 650 has a value of "3" because it covers three bilevel pixels having an "on" state. Pixels 740 and 750, shaded like pixel 840 and 850, respectively, are shown in FIG. 7, labeled with a grayscale value of "2" and "3" for clarity.

A grayscale image pixel 860 that has the maximum grayscale shade available from the decimation used in this example (a bit more shaded than pixel 850, and corresponding to a grayscale value of "4") is one pixel below and to the right of pixel 820 in FIG. 8. FIG. 6 shows a circle 660 labeled "4" that represents pixel 860. Circle 660 has a value of "4" because it covers four bilevel pixels having an "on" state. A pixel 760, shaded like pixel 860, is shown in FIG. 7, labeled with its grayscale value of "4" for clarity.

FIG. 9 shows capped grayscale image 900 that is similar in most respects to grayscale image 800 of FIG. 8. All pixels of image 800 correspond to pixels at the same row and column location in image 900 except for pixel 860. One pixel 960 in image 900 (corresponding to pixel 860 in image 800) has a grayscale shade that corresponds to grayscale value of "3." Each pixel of both image 800 and image 900 is represented by a matrix element of grayscale image matrix 240, shown in FIG. 3. Elements of matrix 240 that represent pixels of image 900 are preferably stored in memory as two-bit values. Since a two-bit number can only take on a value between zero and three, pixel 960 is not allowed to be shaded with a grayscale value of "4." Instead, pixel 960 is shaded only to a value of "3."

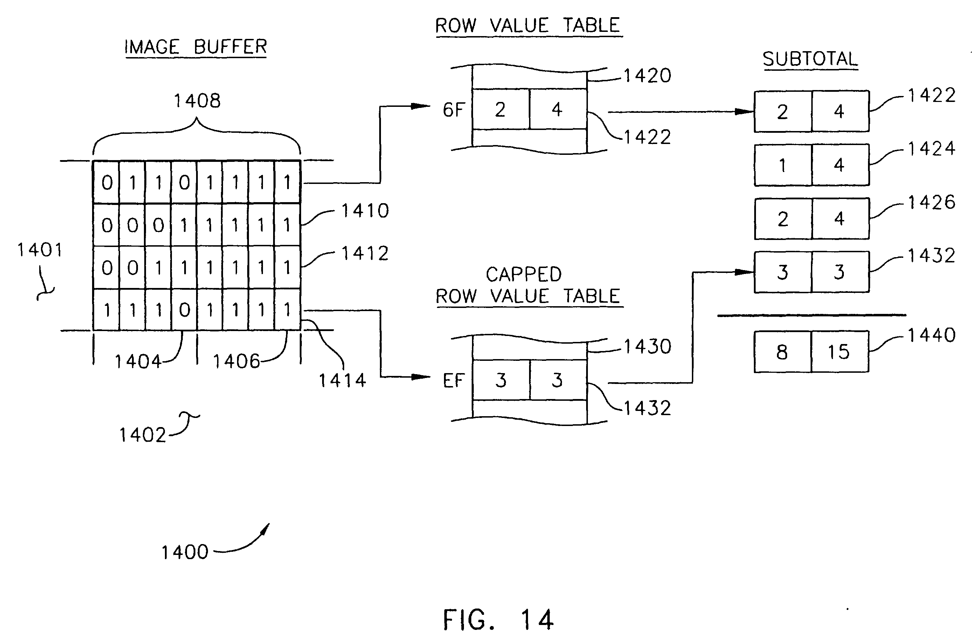

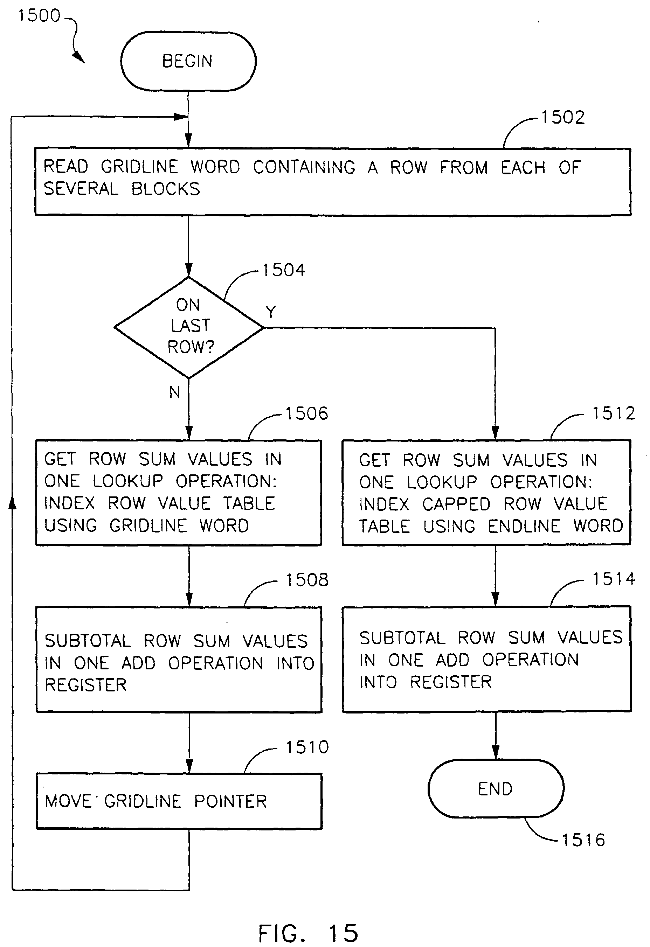

A decimator of the present invention is any device or processes that determines a grayscale value for a group of bilevel pixels. Decimation may include totalizing, averaging, forming a weighted average, filtering, or combinations of these arithmetic techniques. In general, decimation proceeds through an image matrix, in a left to right and top to bottom fashion, preferred for simplicity. An example of some of the operations of a decimation process of the present invention is illustrated in FIG. 14 and a portion of a decimation method is illustrated by the flow diagram of FIG. 15.

An image buffer supplied as input to a decimation process includes a grid of same-size blocks. The grid of image buffer 1400 includes, for example, horizontal gridline 1401 and vertical column 1402. Block 1404 is a member of gridline 1401 and of column 1402 and includes sixteen bilevel pixels arranged in four rows and four columns. Same-size block 1406 includes sixteen pixels in the same arrangement.

Decimation proceeds with reference to two tables. Row value table 1420 and capped row value table 1430 each include 256 entries. Each entry includes an 8-bit word made up of two 4-bit integers. The number of ones in a row of a block is determined by forming an index value from the row itself. As illustrated, two row values are combined to form one index value. By using the index into row value table 1420, a count of the ones in a row of a block is determined. As illustrated, two independent counts 1422 are determined in one read operation. In table 1420, each count has a range from 0 to 4. However, in table 1430, a modified copy of table 1420, all counts of value 4 are capped at value 3; all other counts remain the same as in table 1420. As will be discussed below, by capping the value in table 1430, a total number of bits in each of two same-size blocks is calculated with a minimum of operations. These operations are described in method 1500 of FIG. 15, which may be performed by a conventional processor, such as processor 56 of FIG. 1.

Method 1500 may be performed with reference to any size block. For convenience, reference is made in the following description to FIG. 14 where a 4-by-4 block is read and 8-bit arithmetic operations are performed. In variations, any number of blocks may be suitably processed in parallel according to aspects of method 1500. Particular efficiencies result when the number of bits processed in parallel is equal to (or substantially equal to) the number of bits that are efficiently read in a single memory access instruction or summed in a register arithmetic operation.

At step 1502, a gridline 1408 is read from image buffer 1400. This gridline includes a 4-bit top row of block 1404 having a hex (hexadecimal) value of 0x6 and contains a 4-bit top row of block 1406 having a hex value of 0xF. In combination, a hex index value of 0x6F is formed.

At step 1504, a test is made to determine if the row read in step 1502 is the last row of the block. When processing rows 1408-1412 control passes to step 1506. When processing row 1414, control passes to step 1512.

At step 1506, a row sum value for each block 1404 and 1406 is obtained by one table lookup operation. At index 0x6F, one word 1422 containing row sum values in parallel format includes the value 2 corresponding to two one bits in the row containing "0110" of block 1404 and includes the value 4 corresponding to four one bits in the row containing "1111" of block 1406.

At step 1508 the row sum value word read in step 1506 is suitably stored or added to a register for accumulating an independent total count of bits in each block.

At step 1510, a pointer value is incremented to permit reference to row 1410. To refer to the next row, the pointer is incremented the number of 8-bit words in the current row. Control then passes to step 1502. Steps 1502 through 1510 constitute a loop that is executed four times. In the second iteration, gridline 1410 is read to index table 1420 which provides counts 1424. In the third iteration, gridline 1412 is read to index table 1420 which provides counts 1426. At each execution of step 1508, The cumulative subtotal of bits in each block is formed in the register. Note that one add operation is executed in each interaction of the loop to provide all updated cumulative subtotals in parallel format.

When gridline 1414 is read at step 1502, control passes through step 1504 to step 1512.

At step 1512, a capped row sum value for each block 1404 and 1406 is obtained from capped row sum value table 1430 by one table lookup operation. At index 0xEF, one word 1432 containing row sum values in parallel format includes the value 3 corresponding to three one bits in the row containing "1110" of block 1404 and includes the value 3 (rather than 4) corresponding to four one bits in the row containing "1111" of block 1406. By substituting table 1430 for table 1420 (step 1512 vs. 1506) while processing any gridline, it is not possible for the accumulated subtotal of row sum values of one block to affect (by an arithmetic carry) the subtotal of any other block even though the row sum values pass in parallel format through a conventional arithmetic unit of the processor.

At step 1514, the final add operation is executed using the capped row sum values obtained in step 1512. After step 1514, the register contains a block sum value of 8 for block 1404 and a block sum value of 15 for block 1406.

At step 1516 processing of the group of blocks 1404 and 1406 is complete. In a preferred embodiment, block sum values 1440 are written to replace row 1408. Each block sum value (a 4-bit value) represents a grayscale value for the respective block 1404 and 1406. Because no further reference is needed to bilevel data of the blocks, overwriting the top row avoids allocation of memory for the results. By avoiding additional memory allocation, decimation is performed faster and with fewer demands for resources of the system performing the decimation process.

Processing of a next group of blocks to the right or below blocks 1404 and 1406 may proceed in the same manner as described above until all blocks of the image buffer are decimated. The image buffer need not contain a complete image. For example, when only a portion of an image is decimated and then output for display or printing, a minimum amount of memory (substantially less than the memory of the entire image) is dedicated to decimation.

In a variation of the present invention, decimation process 250 provides the grayscale image result to error diffusion process 260. Process 260 forms bilevel image 265 and output image 135, based on grayscale image 165 in grayscale image matrix 240. In an alternate system wherein process 260 is omitted, output image 135 is formed directly from grayscale image 165 in matrix 240.

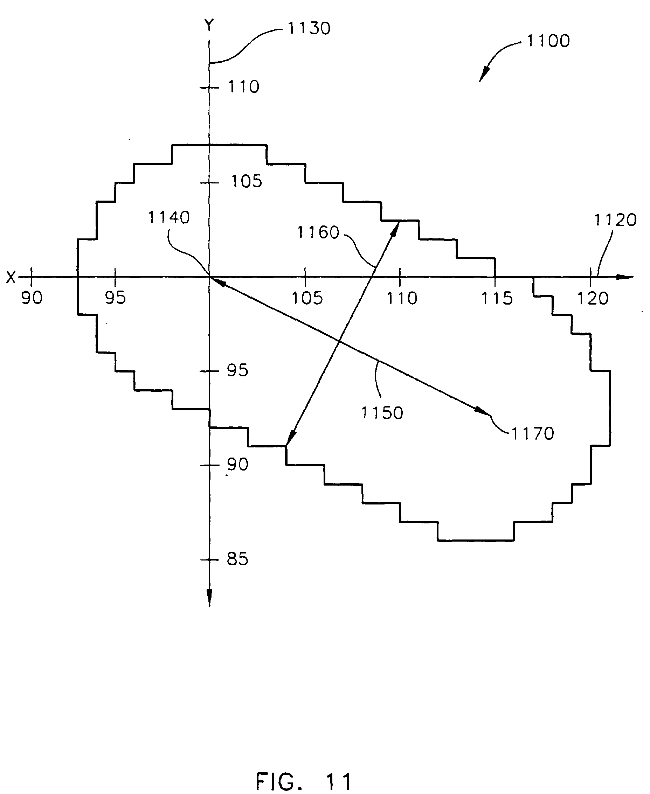

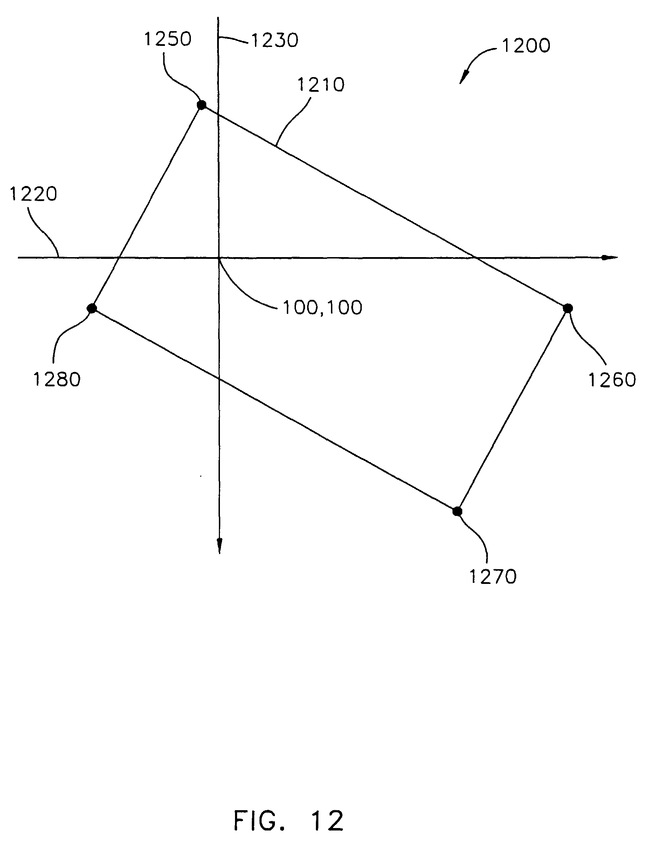

FIGS. 5, 11, and 12 show examples of different types of images that are rendered in oversized image matrix 230. FIG. 5 shows an oversized raster image 500 (corresponding to 155a of FIG. 3). FIGS. 11 and 12 show oversized vector objects (corresponding to 155b of FIG 3). Vector objects include vector shapes (e.g., 1110) and polygons (e.g., 1210). Image 500, vector shape 110, and polygon 1210 are rendered in this example by graphics renderer 156 with enlarging scaling factor 153, determined by scale controller 152 (all shown in FIG. 2).

Table I

| Newpath |
| --- |
| 75 75 moveto |
| 86.3 69.8 lineto |
| 1 setlinecap |
| 9.8 setlinewidth |
| Stroke |

FIG. 11 shows vector shape 1110 rendered with an enlarging scaling factor of 4/3 from PDL commands shown in Table I. Renderer 156 renders vector shape 1110 when interpreter 154 has provided suitable vector coordinate data 159 from these PDL commands. The PDL commands describe a vector by specifying the location of beginning and ending points. For example, the PDL commands in Table 1 specify beginning point (75,75) and ending point (86.3, 69.8) for a vector having a length of about 12.4. PDL commands may also describe width 1160, grayscale shade, as well as a raster pattern to be used when rendering the vector shape..

Vector object renderer process 220 (shown in FIG. 3) renders oversized vector objects based on PDL commands that describe vector objects. Process 220 determines element values in portions of oversized image matrix 230, for example the portion represented by FIG 11. PDL interpreter 154 provides process 220 with coordinate data 159 from such PDL commands. For example, process 220 renders vector shape 1110 in a two-dimensional grid 1100, arranged at the resolution of the oversized intermediate image. Grid 1100 contains elements arranged in a coordinate system having an X-axis 1120 and a Y-axis 1130. For convenience, the intersection of these axes is shown at a starting coordinate 1140 of line 1150. Coordinate 1140 is at element (100,100) in grid 1100. Vector 1150 is drawn from starting coordinate 1140 to ending coordinate 1170, which is at element (115, 93) in grid 1100. The length of vector 1170 is the distance between coordinates 1150 and 1170, and is approximately 16.6 elements.

Vector shape 1110 has been rendered with a length of 16.6 grid elements (as opposed to 12.4 as in Table 1) according to an enlarging scaling factor of 4/3, or approximately 133%. Specifically: 75*4/3=100, 86.3*4/3=115, and 69.8*4/3=93.

Vector object renderer process 220 preferably uses a technique for rendering vector shapes as disclosed in co-pending, commonly owned U.S. patent application 08/996,094 to Dimitri, now U.S. patent _____, incorporated herein by reference. Process 220 renders vector objects by an enlarging scaling factor, so that the resulting oversized image is larger than that specified by coordinate data 159. For example, the vector specified in Table 1 is enlarged by 4/3 and then reduced by a factor of four in decimator 154. This vector object is ultimately rendered at an output resolution which is 1/3 the resolution specified by the PDL commands in Table 1.

Table II

| PDL Command | Comment |
|---|---|
| Newpath | % clear any previous path |
| 74.3 69 moveto | % move to upper left coordinate |
| 90.8 72.8 lineto | % enter edges of polygon |
| 85.9 85.9 lineto | |
| 69.5 77.3 lineto | |
| 74.3 69 lineto | |
| 0.0 setgray | % fill with black |
| Fill | % draw polygon |

FIG. 12 shows polygon 1210 rendered with an enlarging scaling factor-of 4/3 from PDL commands shown in Table II. PDL commands describe a polygon by specifying the location of vertices. PDL commands may also describe a shade and a pattern used when rendering the filled polygon.

As discussed above, vector object renderer, process 220 renders oversized vector objects based on PDL commands that describe vector objects. For example, renderer 220 renders polygon 1210 in a two-dimensional grid 1200, arranged at the resolution of oversized intermediate image 230. Renderer 220 renders polygon 1210 responsive to coordinate data 159, which is based on PDL commands in Table II. Grid 1200 contains elements arranged in a coordinate system having an X-axis 1220 and a Y-axis 1230. The intersection of these axes is at element (100,100) in grid 1200. Vector rendering process 220 renders polygon 1210 from a starting coordinate 1250 to a second coordinate 1260, then to a third coordinate 1270, then to a fourth coordinate 1280, and finally back to the starting coordinate 1250.

Renderer 220 draws polygon 1210 with coordinates 1250, 1260, 1270, and 1280 having the following (x,y) locations in grid 1200. Coordinate 1250 is at (99, 92). Coordinate 1260 is at (121,97). Coordinate 1270 is at (114.5, 114.5). Coordinate 1280 is at (92.5,103). All of these (x,y) coordinate values are 4/3 larger than the values specified by the PDL commands in Table II. In this example, polygon 1210 is enlarged by 4/3 and then reduced by a factor of four in decimator 154. Like vector shape 1110 of FIG. 11, polygon 1210 is ultimately rendered at an output resolution that is 1/3 the resolution specified by the PDL commands describing it, in this case the commands in Table II.

Vector object renderer 220 suitably renders polygons using conventional techniques adapted according to aspects of the present invention. In one variation, process 220 uses techniques of the type described in: James D. Foley et al. *Computer Graphics*; *Principles* and *Practice*. Addison-Wesley, 1996, at pp. 92-99, and Michael Abrash. *Michael Abrash's Graphics Programming Black Book*, *Special Edition*. Coriolis Group, 1997 at pp. 709-713, 725-727, 741-745, both portions of which are hereby incorporated by reference.

FIG. 4 shows a shape 410, which is part of a raster image 400; PDL commands shown in Tables III and IV below describe image 400. Image 400 is made up of a 6x6 matrix of pixel elements, which are identified by row labels R0 through R5 and column labels C0 through C5. It should be noted that image 400 is not actually displayed in this embodiment of the present invention. Rather, image 400 represents what would be rendered from the PDL commands in Tables III and IV without an enlarging scaling factor.

## Table III

| PDL Command | Comment |
|---|---|
| /rasterobject < | |
| 00 | Row 0 Bits (Hex) |
| 20 | Row 1 Bits (Hex) |
| 70 | Row 2 Bits (Hex) |
| 38 | Row 3 Bits (Hex) |
| 10 | Row 4 Bits (Hex) |
| 00 | Row 5 Bits (Hex) |
| > def | % hexadecimal image string |
| 74.3 69 translate | % set origin (where is the offset??) |
| 8 6 1 | % width, height, depth |
| [ 8 0 0 6 0 0 ] | % image matrix |
| { rasterobject } | % image procedure |
| image | % image operation |

Raster image 500, shown in FIG. 5, is specified by PDL commands received as input image indicia through I/O controller 55. Examples of such PDL commands are shown in Tables III and IV. Table III shows PDL commands in binary format used to render raster image 500, while Table IV shows equivalent PDL commands in run-length format.

Table III shows PDL commands in binary format that describe image 500. The pixel elements in each row are encoded as individual bits in a hexadecimal number. There are six pixel elements per row and eight bits in each hexadecimal number. The least significant two bits in each hexadecimal number are set to zero.

Table IV shows PDL commands in run-length format that describe image 500. PDL commands in run-length format describe a raster image from the transition points between groups of successive pixels. These groups are continuous lines of pixels having the same color or intensity characteristic. In this example, image 500 is encoded with Group 3 encoding, which uses Huffman bit codes. This coding assumes an 8x6 grid for byte alignment, although only a 6x6 grid of pixel elements is displayed.

**Table IV**

| PDL Command | Comment |
|---|---|
| 99 92 translate | % set origin |
| 0.0 setgray | |
| /ImageType 1 | |
| /Width 8 | |
| /Height 6 | |
| /BitsPerComponent 1 | |
| | % Define CCITT decoding parameters |
| /_ReadData{/in_data    currentfile | |
| /ASCII85Decode filter 7 dict dup | |
| /Uncompressed false put dup | |
| /K 0 put dup | |
| /EndOfBlock false put dup | |
| /EndOfLine false put dup | |
| /Rows 6 put dup | |
| /Columns 8 put dup | |
| /CCITTFaxDecode  filter  def}bind | |
| def | |
| /Filter               [/HexDecode | |
| /CCITTFaxDecode] | |
| 0x9B 0xAC 0x1E 0xB7 0xA2 0x15 | |
| 0xCC | |
| ~> | |

Table V

| Row | Binary | Bit Codes | Pixel Group |
|---|---|---|---|
| 0 | 10011 | 0x13 (5 bits) | White 8 |
| 1 | 0111 | 7 (4 bits) | White 2, Black 1, White 5 |
| | 010 | 2 (3 bits) | |
| | 1100 | 0x0c (4 bits) | |
| 2 | 000111 | 7 (6 bits) | White 1, Black 3, White 4 |
| | 10 | 2 (2 bits) | |
| | 1011 | 0x0b (4 bits) | |
| 3 | 0111 | 7 (4 bits) | White 2, Black 3, White 3 |
| | 10 | 2 (2 bits) | |
| | 1000 | 8 (4 bits) | |
| 4 | 1000 | 8 (4 bits) | White 3, Black 1, White 4 |
| | 010 | 2 (3 bits) | |
| | 1011 | 0x0b (4 bits) | |

Table V (continued)

| Row | Binary | Bit Codes | Pixel Group |
|---|---|---|---|
| 5 | 10011 | 0x13, (5 bits) | White 8 |

Raster image renderer 210 (FIG. 2) expands the PDL code shown in Table IV into raster image 500 (FIG. 5) one row at a time. The encoded image data appears in the code of Table IV in the following hexadecimal format: "0x9B 0xAC 0x1E 0xB7 0xA2 0x15 0xCC." This data represents conventional variable length Huffman bit codes, which are extracted from the above hexadecimal data. The variable length bit codes are shown in a column of Table VI below. Because the binary codes have variable length, they do not line up with any particular portion of the hexadecimal data above. Codes are formed in any conventional manner from appropriate portions of the hexadecimal quoted above.

Raster image renderer 210 (shown in FIG. 2) renders oversized raster image 500, shown in FIG. 5, based on PDL commands that describe raster images. PDL interpreter 154 provides renderer 210 with transition points 157 from such PDL commands. Renderer 210 renders raster image 500 in oversized intermediate image matrix 230, using transition points 157 along with an enlarging scaling factor of 4/3. Renderer 210 receives the enlarging scaling factor from scale controller 152.

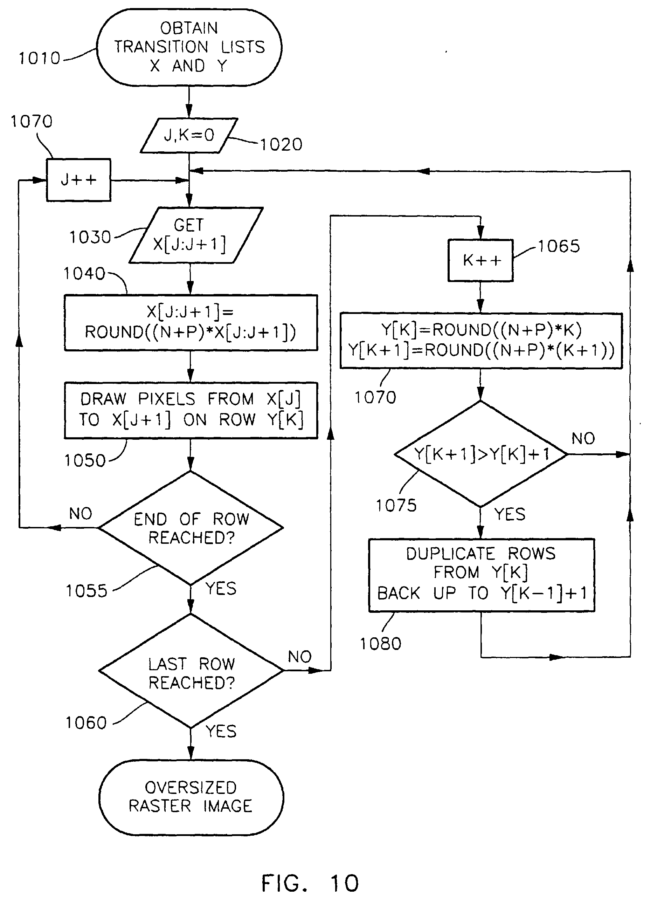

Table V describes image 400 and intermediate data illustrating how raster image renderer 210 renders oversized raster image 500 (having more pixels) from transition points 157 that specify image 400. Table V lists runs of pixels (having the same characteristic) describing each row of image 400. Table V also shows the scaling that raster rendering process 210 performs to create oversized raster image 500 in oversized intermediate image matrix 230. A method for such scaling is described in FIG. 10.

The first column of Table V is a heading that shows which row of image 400 is being scaled to create the corresponding row(s) of oversized image 500. As will be explained below, a single row of image 400 is sometimes the source of more than one row of oversized image 500. Raster renderer 210 renders oversized raster image 500, first by duplicating pixels in each row, then by duplicating rows as necessary. Renderer 210 thus renders oversized raster image 500 using a single enlarging scaling factor for both the vertical and horizontal dimensions.

FIG. 10 is a functional flow diagram that describes, along with Table V, an example of the rendering process performed by oversized raster renderer 210. The process begins at process step 1010 by obtaining lists of transition points X and Y from memory 1322, 1324. These lists of transition points contain transition points 157, which are the input of rendering process 210. Transition list X is shown in the fifth column of Table V, labeled "X: Transition Point." Transition list Y is shown in the first column of Table III, labeled "Y: Row."

Two pointers, J and K respectively, are used to access transition lists X and Y. At step 1020, these pointers are reset to initial values of zero. Then, at step 1030, the first pair of transition points in the first row is accessed. The first pair of X transition points in Table III is [0, 6]. This pair corresponds in FIG. 4 to row R0, columns C0:C5 (6 elements). Process step 1040 scales these transition points by the enlarging scaling factor N+P and overwrites the old transition points [0, 6] with new transition points [0,8], which are shown in the seventh column of Table III.

Process step 1050 assigns values to pixels in matrix 230 from the first transition point to the second transition point in the present row, which corresponds to row R0 of FIG.5 at this step of the rendering process. If the second transition point has not reached the end of the present row, decisions step 1055 causes process steps 1030 through 1050 to be repeated. Before steps 1030-1050 are repeated, however, pointer J is incremented to the next pair of X transition points. The first transition point in the new pair is the second transition point of the old pair. Image 400, described by PDL commands in Tables III and IV, has only white pixels in its first row R0. Accordingly, there is only one pair of transition points in first row R0, as shown in Table V.

The run lengths specified by transition points 157, shown in the fifth column of Table V, are to be generally lengthened in proportion to the enlarging scaling factor. In the example described with respect to Table V and FIGS. 4-5, the enlarging scaling factor is 4/3. In the embodiment of the invention described by this example, the scaled-up transition points are rounded to the nearest integer. Accordingly, a particular pixel run in oversized raster image 500 is generally either slightly larger or smaller than the exact multiple of the corresponding pixel run in image 400. Image 400 represents an image specified by the original transition points.

After each pixel run in row R0 has been rendered, decision step 1055 determines that the end of row R0 has been reached. That is, in a conventional manner the end of the X list of transition points for this row (Y) is detected. Then decision step 1060 determines whether the last row in image 400 (described PDL commands in Tables III and IV) has been reached. Since there are 6 rows (R0:5) in image 400, the answer in decision step 1060 is "no," and process step 1065 increments pointer K to 1.00. Then process step 1070 expands the row number (pointer K now points to row R1) by the enlarging scaling factor of 4/3. The initial scaled row number is 1.33, shown in the second column of Table V, labeled "Initial Scaled Row." However, process step 1070 also rounds the scaled row number, which in this case causes no scaling to occur. This is because step 1070 rounds the initial scaled row number (1.33) to 1.00. This latter number is considered to be the scaled row number, and is shown in the third column of Table V.

Process step 1075 determines whether scaling of the present row number causes that row number to increase by two or more from the previous scaled row number. At this point in the process, the present unscaled row number is 1.00, and the present rounded scaled row number is 1.00. The answer in decision step 1075 is "no" because 1.0 not two or more greater than the previous rounded scaled row number (zero). Thus, the process resumes at 1030, with pointer J set to the first transition point in second row R1 and with pointer K set to row R1.

The first two pairs of X transition points in row R1 of FIG. 4 are [0,2] and [2,3]. Process step 1050 begins rendering the row R2 of oversized image 500 by drawing four white pixels from point 0 through point 3 from transition points [0,2], these points having been scaled up by process step 1040. Process step 1050 then continues rendering the second row of oversized image 500 by drawing one black pixel at point 4 from transition points [2,3]. These points are scaled up by process step 1040 to [2.67,4.00], which is rounded off to [3,4]. This scaled-up pair of X transition points specifies a pixel run of one, which is the same run length as the original [2,3].

After each pixel run in row R1 of FIG. 4 has been rendered, decision step 1055 determines that the end of row R1 has been reached. Decisions step 1060 again determines that the last row in image 400 (described by Table V) has not yet been reached. Process step 1065 increments pointer K to 2.00, and step 1070 scales that row number to 2.67. Step 1070 also rounds the scaled row number to 3.00, because this is the closest integer to 2.67.

Decision step 1075 in this case does determine that the scaling of the present row number has caused that scaled row number (3.00) to increase by two or more from the previous scaled row number (1.00). This causes process step 1080 to duplicate the row that has just been rendered (row R2 of image 400 and scaled row R3 of image 500) to fill any un-rendered rows above this scaled row.

Processing for Step 1080 is preferably executed to some extent concurrently with step 1050, according to conventional programming techniques.

In this case, R2 of image 500 has been skipped. Row R1 of image 400 (described by PDL commands in Tables III and IV) was rendered as row R1 of image 500. The next row (row R2) of image 400 is rendered as row R3 of image 500. Accordingly, step 1080 fills row R2 of image 500 with the contents of row R3 of image 500.

The process shown in FIG. 10 continues until all rows specified by transition points 157 (based on PDL commands in Tables III and IV) have been rendered. Table V shows these transition points and rows, before and after scaling of both.

Table V

| Y: Row | Initial Scaled Row | Scaled Row | New Rows Filled | X: Transition Point | Scaled Transition Point | New Transition Point | Length of Scaled Run | Pixel color in Run |
|---|---|---|---|---|---|---|---|---|
| 0.00 | 0.00 | 0.00 | 0 | 0 | 0.00 | 0 | | |
| | | | | 6 | 8.00 | 8 | 8.00 | White |
| 1.00 | 1.33 | 1.00 | 1 | 0 | 0.00 | 0 | | |
| | | | | 2 | 2.67 | 3 | 3.00 | White |
| | | | | 3 | 4.00 | 4 | 1.00 | Black |
| | | | | 6 | 8.00 | 8 | 4.00 | White |
| 2.00 | 2.67 | 3.00 | 2,3 | 0 | 0.00 | 0 | | |
| | | | | 1 | 1.33 | 1 | 1.00 | White |
| | | | | 4 | 5.33 | 5 | 4.00 | Black |
| | | | | 6 | 8.00 | 8 | 3.00 | White |
| 3.00 | 4.00 | 4.00 | 4 | 0 | 0.00 | 0 | | |
| | | | | 2 | 2.67 | 3 | 3.00 | White |
| | | | | 5 | 6.67 | 7 | 4.00 | Black |
| | | | | 6 | 8.00 | 8 | 1.00 | White |
| 4.00 | 5.33 | 5.00 | 5 | 0 | 0.00 | 0 | | |
| | | | | 3 | 4.00 | 4 | 4.00 | White |
| | | | | 4 | 5.33 | 5 | 1.00 | Black |

Table V (continued)

| Y: Row | Initial Scaled Row | Scaled Row | New Rows Filled | X: Transition Point | Scaled Transition Point | New Transition Point | Length of Scaled Run | Pixel color in Run |
|---|---|---|---|---|---|---|---|---|
| | | | | 6 | 8.00 | 8 | 3.00 | White |
| 5.00 | 6.67 | 7.00 | 6,7 | 0 | 0.00 | 0 | | |
| | | | | 6 | 8.00 | 8 | 8.00 | White |

While the invention has been described in terms of preferred embodiments, those of skill in the art will understand that other variations may be devised without departing from the invention as claimed below.

**Claims**

1.  A method of rendering an image from image indicia at a lower resolution than that specified by the image indicia, the method comprising:

    providing image indicia, the image indicia specifying an input image to be rendered at an input spatial resolution;
    rendering an intermediate image by determining values in an oversized image matrix from the image indicia at an intermediate spatial resolution, the intermediate spatial resolution being made higher than the input spatial resolution by a changeable enlarging scaling factor selected from a set, the set including both integer and non-integer values;
    decimating the intermediate image matrix to generate a grayscale image matrix at an output spatial resolution, the output spatial resolution being made lower than the intermediate spatial resolution by a fixed integer decimation ratio, the grayscale value of each element in the decimated grayscale image matrix being calculated from a plurality of elements in the oversized image matrix; and
    providing an output image derived from the grayscale image matrix.

2.  The method of claim 1 further comprising:

    providing an overall scaling factor equal to the ratio of the first spatial resolution over the third spatial resolution;

    determining a ratio $(N+P)x(1/R)$ substantially equal to the overall scaling factor, wherein

        i. N is an integer value represented by a binary number with a first numerical weight,
        ii. P is a fractional value represented by a binary number with a second numerical weight lower than the first numerical weight, and
        iii. 1/R is a fixed integer decimation ratio; and

    setting the enlarging scaling factor substantially equal to $(N+P)$.

3.  The method of claim 1 wherein the fixed integer decimation ratio is an integer divided by a power of two, the power of two being in the range from four to eight.

4.  The method of claim 1 wherein the image indicia comprises PDL commands for rendering vector objects, and the image in the oversized image matrix comprises oversized vector objects rendered with the enlarging scaling factor.

5.  The method of claim 1 wherein the image indicia comprises PDL commands for rendering raster images, and the image in the oversized image matrix comprises oversized raster images rendered from a run-length format, the run-length format specifying transition points, the transition points being scaled by the enlarging scaling factor.

6.  The method of claim 1 wherein the image indicia comprises:

    PDL commands for rendering vector objects, and the image in the oversized image matrix comprises oversized vector objects rendered with the enlarging scaling factor; and
    PDL commands for rendering raster images, and the image in the oversized image matrix comprises oversized raster images rendered from a run-length format, the run-length format specifying transition points, the transition points being scaled by the enlarging scaling factor.

7. The method of claim 1 further comprising an error diffusion step for converting the grayscale image matrix into the output image, the output image having bi-level pixels.

8. The method of claim 7 wherein the output image is formed on a printed page.

9. The method of claim 6 further comprising an error diffusion step for converting the grayscale image matrix into the output image, the output image having bi-level pixels.

10. The method of claim 9 wherein the output image is formed on a printed page.

11. The method of claim 1 wherein the decimated grayscale image is displayed on a video monitor, and wherein the overall scaling factor is determined by user input.

12. The method of claim 1 further comprising printing the output image on a page.

13. The method of claim 2 further comprising printing the output image on a page.

14. The method of claim 3 further comprising printing the output image on a page.

15. The method of claim 4 further comprising printing the output image on a page.

16. The method of claim 5 further comprising printing the output image on a page.

17. The method of claim 6 further comprising printing the output image on a page.

18. The method of claim 7 further comprising printing the output image on a page.

19. The method of claim 9 further comprising printing the output image on a page.

20. The method of claim 1 further comprising saving indicia of the output image to a storage medium.

21. The method of claim 20 further comprising printing or viewing the output image at a remote computer in accordance with indicia from the storage medium.

22. An apparatus for rendering an image from image indicia at a lower resolution that an input spatial resolution specified by the image indicia, the apparatus comprising:

    (a) a graphics rendering subsystem including:

        i. a scale controller to provide a changeable enlarging scaling factor selected from a set, the set including both integer and non-integer values, and
        ii. a graphics renderer coupled to the scale controller and responsive to the image indicia so as to render an image in an oversized image matrix at an intermediate spatial resolution higher than the input spatial resolution;

    (b) a decimator responsive to the oversized image matrix to provide a grayscale image matrix at an output spatial resolution lower than the intermediate spatial resolution; and
    (c) an output image display subsystem coupled to the decimator so as to provide an output image derived from the grayscale image matrix.

23. The apparatus of claim 22 wherein the scale controller is responsive to an overall scaling factor equal to the ratio of the first spatial resolution over the third spatial resolution, $(N+P)\times(1/R)$, to provide an enlarging scaling factor substantially equal to $(N+P)$, wherein

    i. N is an integer value represented by a binary number with a first numerical weight,

ii. P is a fractional value represented by a binary number with a second numerical weight lower than the first numerical weight, and

iii. 1/R is the fixed integer decimation ratio.

**24.** The apparatus of claim 22 wherein the fixed integer decimation ratio is equal to one fourth.

**25.** The apparatus of claim 22 wherein the output image display subsystem comprises a video monitor for displaying the output image at an overall scaling factor set by a user input.

**26.** The apparatus of claim 22 wherein the output image display subsystem comprises a printer for forming the output image on a printed page.

**27.** The apparatus of claim 22 wherein the output image display subsystem comprises a video monitor and a printer.

**28.** The apparatus of claim 22 wherein the graphics renderer is responsive to PDL commands for rendering vector objects and renders oversized vector objects to the image in the oversized image matrix with the enlarging scaling factor.

**29.** The apparatus of claim 22 wherein the graphics renderer is responsive to PDL commands for rendering raster images, and renders oversized raster images to the image in the oversized image matrix from a run-length format, the run-length format specifying transition points, the transition points being scaled by the enlarging scaling factor.

**30.** The apparatus of claim 22 wherein the graphic renderer is responsive to:

PDL commands for rendering vector objects, and the image in the oversized image matrix comprises oversized vector objects rendered with the enlarging scaling factor; and
PDL commands for rendering raster images, and the image in the oversized image matrix comprises oversized raster images rendered from a run-length format, the run-length format specifying transition points, the transition points being scaled by the enlarging scaling factor.

**31.** The apparatus of claim 22 wherein the output image display subsystem includes an error diffusion stage that provides the output image from the grayscale image matrix, the output image having bi-level pixels.

**32.** The apparatus of claim 30 wherein the output image display subsystem includes an error diffusion stage that provides the output image from the grayscale image matrix, the output image having bi-level pixels.

**33.** A prerecorded data storage medium comprising:

(a) a data storage medium; and
(b) program indicia recorded on the medium, the program indicia comprising instructions for a processor to perform a rendering method for rendering an image from image indicia at a lower resolution than that specified by the image indicia, the rendering method comprising:

providing image indicia, the image indicia specifying an input image to be rendered at an input spatial resolution;
rendering an image in an oversized image matrix from the image indicia at an intermediate spatial resolution, the intermediate spatial resolution being made higher than the input spatial resolution by a changeable enlarging scaling factor;
decimating the oversized image matrix to generate a grayscale image matrix at an output spatial resolution, the output spatial resolution being made lower than the intermediate spatial resolution by a fixed integer decimation ratio, the grayscale value of each element in the decimated grayscale image matrix being calculated from a plurality of elements in the intermediate image matrix; and
providing an output image derived from the grayscale image matrix.

**34.** The prerecorded data storage medium of claim 33, wherein the rendering method further comprises:

providing an overall scaling factor equal to the ratio of the first spatial resolution over the third spatial resolution;
determining a ratio (N+P)x(1/R) substantially equal to the overall scaling factor, wherein

i. N is an integer value represented by a binary number with a first numerical weight,

ii. P is a fractional value represented by a binary number, with a second numerical weight lower than the first numerical weight, and

iii. 1/R is a fixed integer decimation ratio; and

setting the enlarging scaling factor substantially equal to (N+P).

**35.** The prerecorded data storage medium of claim 33 wherein the fixed integer decimation ratio is equal to one fourth.

**36.** The prerecorded data storage medium of claim 33 wherein the image indicia comprises PDL commands for rendering vector objects, and the image in the oversized image matrix comprises oversized vector objects rendered with the enlarging scaling factor.

**37.** The prerecorded data storage medium of claim 33 wherein the image indicia comprises PDL commands for rendering raster images, and the image in the oversized image matrix comprises oversized raster images rendered from a run-length format, the run-length format specifying transition points, the transition points being scaled by the enlarging scaling factor.

**38.** The prerecorded data storage medium of claim 33 wherein the image indicia comprises:

PDL commands for rendering vector objects, and the image in the intermediate image matrix comprises oversized vector objects rendered with the enlarging scaling factor; and

PDL commands for rendering raster images, and the image in the intermediate image matrix comprises oversized raster images rendered from a run-length format, the run-length format specifying transition points, the transition points being scaled by the enlarging scaling factor.

**39.** The prerecorded data storage medium of claim 33 wherein the rendering method further comprises an error diffusion step for converting the grayscale image matrix into the output image, the output image having bi-level pixels.

**40.** The prerecorded data storage medium of claim 39 wherein the rendering method forms the output image on a printed page.

**41.** The prerecorded data storage medium of claim 40 wherein the rendering method further comprises an error diffusion step for converting the grayscale image matrix into the output image, the output image having bi-level pixels.

**42.** The prerecorded data storage medium of claim 41 wherein the rendering method forms the output image on a printed page.

**43.** The method of claim 33 wherein the rendering method displays the decimated grayscale image on a video monitor, and wherein the overall scaling factor is determined by user input.

**44.** An apparatus for rendering an image from image indicia at a lower resolution than that specified by the image indicia, the apparatus comprising:

(a) means for providing image indicia, the image indicia specifying an input image to be rendered at an input spatial resolution;

(b) means for rendering an image in an oversized image matrix from the image indicia at an intermediate spatial resolution, the intermediate spatial resolution being made higher than the input spatial resolution by a changeable enlarging scaling factor, the enlarging scaling factor being determined by

providing an overall scaling factor equal to the ratio of the first spatial resolution over the third spatial resolution,

determining a ratio (N+P)x(1/R) substantially equal to the overall scaling factor, wherein

i. N is an integer value represented by a binary number with a first numerical weight,

ii. P is a fractional value represented by a binary number, with a second numerical weight lower than the first numerical weight, and

iii. 1/R is the fixed integer decimation ratio, and

setting the enlarging scaling factor substantially equal to (N+P); and

(c) means for decimating the oversized image matrix to generate a grayscale image matrix at an output spatial resolution, the output spatial resolution being made lower than the intermediate spatial resolution by a fixed integer decimation ratio, the grayscale value of each element in the decimated grayscale image matrix being calculated from a plurality of elements in the intermediate image matrix; and
(d) means for providing an output image derived from the grayscale image matrix.

45. A method of decimating an image stored in a buffer, the image comprising a grid of same-size blocks, each block comprising a multiplicity of rows; the multiplicity having a total quantity, the method comprising:

reading in one operation a first word in parallel format comprising pixels of a respective row from at least two blocks;
looking up a second word from a first table using the first word as an index value, the second word comprising at least two row sum values in parallel format, each row sum value being a quantity of ones;
adding in one operation the second word to a register to provide in the register at least two block sum values in parallel format;
repeating the steps of reading, looking up, and adding, until the total quantity of rows of the multiplicity have been processed; and
substituting a second table for the first table, during an iteration, the second table comprising row sum values that are capped to prevent a carry from one block sum value into another during an adding operation.

46. The method of claim 45 wherein the same size blocks have four rows.

FIG. 1

OVERALL
SCALING
FACTOR

INPUT
IMAGE
INDICIA

SCALE
CONTROLLER
152

153

READER
140

PDL
INTERPRETER
154

200

GRAPHICS RENDERER

RASTER
IMAGE
RENDERER
210

VECTOR
OBJECT
RENDERER
220

OVER-
SIZED
IMAGE
MATRIX
230

156

DECIMATOR
160

ERROR
DIFFUSER
170

OUTPUT
IMAGE

FIG. 2

21

FIG. 3

FIG. 4

FIG. 5

FIG. 6

FIG. 7

FIG. 8

FIG. 9

FIG. 10

FIG. 11

FIG. 12

FIG. 13

IMAGE BUFFER

ROW VALUE TABLE

SUBTOTAL

1408

| 0 | 1 | 1 | 0 | 1 | 1 | 1 | 1 |
| 0 | 0 | 0 | 1 | 1 | 1 | 1 | 1 |
| 0 | 0 | 1 | 1 | 1 | 1 | 1 | 1 |
| 1 | 1 | 1 | 0 | 1 | 1 | 1 | 1 |

1410

1412

1401

1414

1404      1406

1402

6F | 2 | 4 |

1420

1422

CAPPED
ROW VALUE TABLE

EF | 3 | 3 |

1430

1432

| 2 | 4 | 1422

| 1 | 4 | 1424

| 2 | 4 | 1426

| 3 | 3 | 1432

| 8 | 15 | 1440

1400

FIG. 14

EP 0 981 106 A2

1500

BEGIN

1502

READ GRIDLINE WORD CONTAINING A ROW FROM EACH OF SEVERAL BLOCKS

1504

ON LAST ROW?

Y

N

1506

GET ROW SUM VALUES IN ONE LOOKUP OPERATION: INDEX ROW VALUE TABLE USING GRIDLINE WORD

1512

GET ROW SUM VALUES IN ONE LOOKUP OPERATION: INDEX CAPPED ROW VALUE TABLE USING ENDLINE WORD

1508

SUBTOTAL ROW SUM VALUES IN ONE ADD OPERATION INTO REGISTER

1514

SUBTOTAL ROW SUM VALUES IN ONE ADD OPERATION INTO REGISTER

1510

MOVE GRIDLINE POINTER

END

1516

FIG. 15